# FASCICULE DE BREVET EUROPEEN

(11) **EP 0 763 876 B1**
(45) Date de publication et mention de la délivrance du brevet: **03.11.1999**
(21) Numéro de dépôt: 96202449.3
(22) Date de dépôt: 03.09.1996
(51) Int. Cl.: H02G 15/013, H02G 3/08

(54) **Dispositif de blocage d'un cable dans un boîtier antidéflagrant**
Vorrichtung zur Arretierung eines Kabels in einem explosionsgeschützten Gehäuse
Device for blocking a cable in an explosion-proof housing

(30) Priorité: 13.09.1995 FR 9510805
(43) Date de publication de la demande: 19.03.1997
(73) Titulaire: SCHLUMBERGER INDUSTRIES, 92120 Montrouge (FR)
(72) Inventeur: Nitecki, Jean-Pierre, 78530 Buc (FR); Van Dooren, Guus, 5531 SH Bladel (NL)
(74) Mandataire: Cabinet HERRBURGER

(56) Documents cités:
- DE-A- 1 640 302
- FR-A- 2 066 926
- FR-A- 2 090 148
- FR-A- 2 648 630

## Description

La présente invention concerne un dispositif de blocage d'un câble dans un boîtier antidéflagrant.

L'invention trouve une application particulièrement avantageuse dans le domaine des distributeurs de carburant comportant des boîtiers antidéflagrants.

Les boîtiers antidéflagrants standard sont constitués de deux flasques portant, chacune, au moins une lèvre périphérique formant rebord. Lorsque le boîtier est assemblé, les lèvres correspondantes des flasques sont mises en regard sans contact jointif de manière à définir une zone à travers laquelle les gaz produits lors d'une explosion accidentelle à l'intérieur du boîtier peuvent se détendre et donc se refroidir en sortie dudit boîtier.

Afin de permettre le passage de câbles électriques à travers les boîtiers antidéflagrants, il est généralement prévu des presse-étoupes aménagés dans le boîtier et formant une chambre sensiblement tronconique convergeant vers l'intérieur dudit boîtier. Un joint souple en caoutchouc placé sur le câble est serré dans la chambre tronconique à l'aide d'un bouchon à vis engagé dans ladite chambre dont l'entrée est munie d'un taraudage, ce qui provoque la compression à l'intérieur de la chambre du câble équipé de son joint.

Ainsi assemblé, le presse-étoupe assure une tenue mécanique antiarrachement du câble lors d'une éventuelle explosion du gaz contenu dans le boîtier, car, dans de telles circonstances, il faut absolument éviter l'arrachement du câble hors du boîtier et le passage de flammes à travers la chambre tronconique laissée libre, les flammes devant impérativement passer par la zone de détente du boîtier.

Toutefois, ce type connu de presse-étoupes pour boîtiers antidéflagrants présente l'inconvénient que lorsque l'on veut utiliser des câbles électriques munis de connecteurs, ceux-ci ne peuvent pas traverser les chambres de compression et doivent donc être montés après passage des câbles dans le presse-étoupe.

Aussi, le problème technique à résoudre par l'objet de la présente invention est de proposer un dispositif de blocage d'un câble dans un boîtier antidéflagrant muni au moins de deux lèvres sans contact jointif, définissant une zone de détente de gaz, dispositif qui permettrait l'utilisation de câbles déjà équipés de leurs connecteurs avant qu'ils ne soient mis en place dans le boîtier antidéflagrant.

La solution au problème technique posé consiste, selon la présente invention, en ce que ledit dispositif comprend :
- un joint sensiblement cylindrique en élastomère, placé autour du câble,
- deux demi-coquilles aménagées, chacune, sur une des lèvres dudit boîtier, chaque demi-coquille présentant :
   - des évidements de passage du câble,
   - un logement pour recevoir ledit joint et présentant une forme intérieure sensiblement congruente de la forme extérieure du joint de manière que, les deux demi-coquilles étant assemblées dans une fermeture non étanche du boîtier, lesdits logements forment une chambre de compression dans laquelle le joint est inséré, les logements ayant des dimensions telles que les dimensions extérieures du joint avant insertion sont supérieures aux dimensions correspondantes de ladite chambre de compression.

Ainsi, la mise en place du câble dans le boîtier à l'aide du dispositif de blocage de l'invention se fait par introduction latérale, et non axiale, du joint par rapport à la chambre de compression, la compression elle-même du joint dans la chambre étant réalisée également latéralement lors de l'assemblage des deux demi-coquilles et non axialement à l'aide d'un bouchon à vis.

Le câble peut donc être équipé durant sa fabrication à la fois de ses connecteurs et du joint cylindrique en élastomère. On simplifie ainsi de beaucoup les opérations de montage des boîtiers, ce qui se traduit notamment par une réduction sensible du temps de montage.

Etant donné que, dans ces conditions, le volume de matière du joint est supérieur au volume de la chambre de compression une fois fermée, l'invention prévoit que chaque logement comporte au moins une cellule d'expansion permettant la dilatation du joint à l'intérieur de la chambre de compression.

La description qui va suivre en regard des dessins annexés, donnés à titre d'exemples non limitatifs, fera bien comprendre en quoi consiste l'invention et comment elle peut être réalisée.

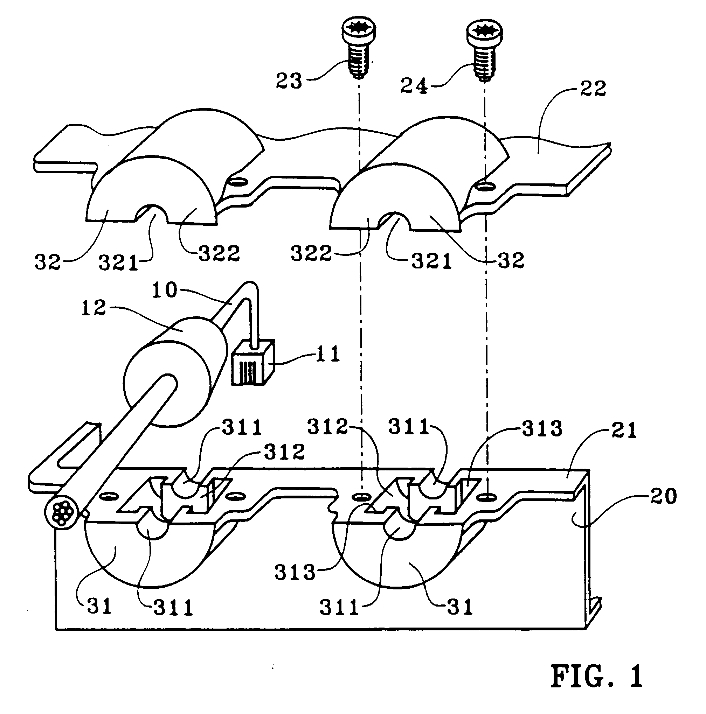

La figure 1 est une vue en perspective d'un dispositif de blocage d'un câble dans un boîtier antidéflagrant, conforme à l'invention.

La vue en perspective de la figure 1 montre un dispositif de blocage dans un boîtier antidéflagrant 20 d'un câble 10 équipé d'un connecteur 11.

Le boîtier 20, en aluminium moulé par exemple, comporte au moins deux lèvres 21, 22 destinées à définir, après montage au moyen des vis 23, 24 d'assemblage, une zone de détente de gaz constituée par l'intervalle laissé libre entre les deux lèvres dans une fermeture non étanche du boîtier.

Comme on peut le voir sur la figure 1, le dispositif de blocage de câble 10 comprend un joint 12 sensiblement cylindrique en élastomère placé autour du câble. Dans l'exemple de la figure 1, le joint 12 affecte la forme d'un cylindre de révolution à base circulaire, mais il pourrait cependant être tout aussi bien cylindrique à base polygonale. Bien entendu, le diamètre intérieur du joint 12 en élastomère est adapté au diamètre extérieur du câble 10.
Le dispositif de blocage du câble 10 dans le boîtier 20 comprend en outre deux demi-coquilles 31, 32 aménagées, chacune, par moulage sur une 21, 22 respectivement des lèvres du boîtier 20. Chaque demi-coquille 31, 32 présente des évidements semi-cylindriques 311, 321 de passage du câble 10, le rayon desdits évidements étant sensiblement égal au rayon dudit câble.

Un logement 312 est aménagé, également par moulage, dans la demicoquille 31 pour recevoir le joint 12. A cet effet, ledit logement 312 présente une forme intérieure sensiblement congruente de la forme extérieure du joint 12. De la même manière, la demi-coquille 32 comporte un logement 322 symétrique du logement 312 de la demicoquille 31.

Lorsque les deux demi-coquilles 31, 32 sont assemblées à l'aide des vis 23, 24, les logements 312, 322 forment une chambre, dite de compression, dans laquelle le joint 12 est inséré sous contrainte en ce sens que les logements 312, 322 ont des dimensions telles que les dimensions extérieures du joint 12 avant insertion sont supérieures aux dimensions correspondantes de ladite chambre de compression.
On assure ainsi la parfaite étanchéité du passage de câble par déformation élastique du matériau élastomère constituant le joint 12 à l'intérieur de la chambre de compression.
Comme le volume du joint 12 est plus grand que le volume de la chambre de compression, on peut prévoir, que chaque logement, ici le logement 312, comporte des cellules 313 d'expansion permettant la dilatation du joint 12 à l'intérieur de la chambre de compression.

## Revendications

1. Dispositif de blocage d'un câble (10) dans un boîtier antidéflagrant (20) muni au moins de deux lèvres (21, 22) sans contact jointif, définissant une zone de détente de gaz, caractérisé en ce que ledit dispositif comprend :
- un joint (12) sensiblement cylindrique en élastomère, placé autour du câble (10),
- deux demi-coquilles (31, 32) aménagées, chacune, sur une des lèvres (21,22) dudit boîtier (20), chaque demi-coquille présentant:
. des évidements (311, 321) de passage du câble (10),
. un logement (312, 322) pour recevoir ledit joint (12) et présentant une forme intérieure sensiblement congruente de la forme extérieure du joint (12) de manière que, les deux demi-coquilles (31, 32) étant assemblées dans une fermeture non étanche du boîtier (20), lesdits logements forment une chambre de compression dans laquelle le joint (12) est inséré, les logements (312, 322) ayant des dimensions telles que les dimensions extérieures du joint (12) avant insertion sont supérieures aux dimensions correspondantes de ladite chambre de compression.

2. Dispositif de blocage selon la revendication 1, caractérisé en ce que chaque logement (312) comporte au moins une cellule (313) d'expansion permettant la dilatation du joint (12) à l'intérieur de la chambre de compression.

## Patentansprüche

1. Vorrichtung zur Arretierung eines Kabels (10) in einem explosionsgeschützten Gehäuse (20), mit zumindest zwei einander nicht berührenden Gehäusehälften (21,22), die eine Gasausdehnungszone festlegen, **dadurch gekennzeichnet**, daß diese Vorrichtung aufweist:
- eine im wesentlichen zylindrische elastomere Manschette (12), die um das Kabel (10) herum verläuft, sowie
- zwei Halbschalen (31,32), von denen jede auf einer der Gehäusehälften (21,22) des Gehäuses (20) angeordnet ist und von denen jede aufweist:
• Ausnehmungen (311,321) für die Aufnahme des Kabels (10) sowie
• Lager (312,322) zur Aufnahme der Manschette (12), die eine innere Form aufweisen, die im wesentlichen deckungsgleich zu der äußeren Form der Manschette (12) ist, so daß die zwei Halbschalen (31,32) im montierten Zustand des Gehäuses (20) dieses nicht dicht verschließen, wobei die Lager eine Stauchkammer bilden, in die die Manschette (12) eingesetzt ist, und wobei die Lager (312,322) derartige Abmessungen aufweisen, daß die äußeren Abmessungen der Manschette (12) vor ihrem Einsetzen größer sind als die entsprechenden Abmessungen der Stauchkammer.

2. Vorrichtung zur Arretierung nach Anspruch 1, **dadurch gekennzeichnet**, daß jedes Lager (312) zumindest einen Ausdehnungsbereich (313) aufweist, der die Ausdehnung der Manschette (12) in das Innere der Stauchkammer hinein ermöglicht.

## Claims

1. A device for blocking a cable (10) in an explosion-proof housing (20) provided with at least two lips (21, 22) placed contactlessly edge to edge defining a gas expansion zone, characterised in that said device comprises:
- a substantially cylindrical elastomer joint (12) placed around the cable (10);
- two half-shells (31, 32), one arranged on each of the lips (21, 22) of said housing (20), each halfshell having:
. recesses (311, 321) through which the cable (10) is passed;
. a compartment (312, 322) for receiving said joint (12), the interior shape thereof being substantially congruent with the exterior shape of the joint (12) so that when the two half-shells (31, 32) are assembled to close but not seal the housing (20) , said compartments form a compression chamber in which said joint (12) is inserted, the compartments (312, 322) being so dimensioned that the external dimensions of the joint (12) before insertion are greater than the corresponding dimensions of said compression chamber.

2. A blocking device as claimed in claim 1, characterised in that each compartment (312) has at least one expansion cell (313) enabling the joint (12) to expand inside the compression chamber.
